# EUROPEAN PATENT SPECIFICATION

(11) **EP 3 355 723 B1**
(45) Date of publication and mention of the grant of the patent: **07.04.2021**
(21) Application number: 16778098.0
(22) Date of filing: 27.09.2016
(51) Int. Cl.: A23P 30/00, A47J 44/00, A21C 1/00

(54) **INGREDIENT PROCESSING SYSTEM & METHOD**
ZUTATENVERARBEITUNGSSYSTEM UND VERFAHREN
SYSTÈME DE TRAITEMENT DES INGRÉDIENTS ET PROCÉDÉ

(30) Priority: 30.09.2015 GB 201517271
(43) Date of publication of application: 08.08.2018
(73) Proprietor: Olympus Automation Limited, Peterborough, Cambridgeshire PE2 6YN (GB)
(72) Inventor: NORMAN, Harry, Oundle Buckinghamshire PE8 5TP (GB); WOOLNER, Paul, Peterborough Cambridgeshire PE7 3RQ (GB)
(74) Representative: Morris, Jonathan Paul
(86) International application number: PCT/GB2016/053005
(87) International publication number: WO 2017/055832

(56) References cited:
- EP-A2- 0 335 698
- US-A- 5 172 328
- US-A1- 2004 172 380
- US-A1- 2005 193 901
- US-A1- 2015 114 236
- US-B1- 7 174 830

## Description

The present invention relates to a processing system, which is suitable for processing ingredients to manufacture foods, a method for manufacturing foods, a receptacle and a processing tool for use in the processing system and method.

Food manufacturing processes, such as ready meal production, are highly labour intensive, with sporadic islands of automation. Quality, recipe and schedule management driven by paperwork systems which are difficult to search and present risk to the factory environment.

A typical food processing system includes a number of floor mounted processing receptacles, each receptacle having a processing tool, such as a mixer or homogenizer, associated therewith. Platforms are located adjacent to the receptacles to enable workers to load ingredients manually into the processing receptacles and to inspect the foodstuff as it passes through the various stages of preparation. Each receptacle includes at least one discharge valve, typically located towards the base of the receptacle, and a network of pipes, valves and pumps for passing substances between receptacles, to intermediate stores and to packaging equipment.

A traditional food manufacturing process is expensive to set up because of the requirement to provide platforms and the network of pipes, valves and pumps. It also requires a relatively large factory in order to accommodate all of the necessary equipment, and since the layout is largely fixed, there is little processing flexibility. To accommodate a new process, or manufacture of a new food, a new layout is often required.

Operating costs can be high because the process is labour intensive, particularly around the area of ingredient preparation and loading. Despite having a lot of workers at the ingredient preparation and loading phase, in some instances, this phase of production can take 2-3 times the duration of the cooking phase.

In order to increase throughput at the cooking / mixing phase of a batch manufacturing process, the industry approach is to increase the size of receptacles used. This changes the ratio of loading time to mixing time, but brings about a number of process challenges. For example, products do not always scale well for production in a large receptacle. Processes with large receptacles, often up to 3 Tonnes in high capacity plants, can suffer from inconsistent cooking profiles across the receptacle. Furthermore, ingredient handling containers for larger receptacles are either too numerous or too cumbersome for ease of manual handling.

With traditional food manufacturing systems, there can be difficulties with cleaning the processing equipment, particularly large receptacles and their associated processing tools

From US-2005/0193901 a food processing system is know, which comprises a robotic arm capable of manipulating multiple devices, such as receptacles, mixing tools etc.

Accordingly the present invention seeks to provide a processing system, a method for manufacturing foods, a receptacle and a processing tool that mitigates at least one of the aforementioned problems, or at least provides an alternative to existing systems.

According to one aspect of the invention there is provided an ingredient processing system according to claim 1. The ingredient processing system is used for processing foodstuff ingredients to manufacture foods such as ready meals, sauces, soups, condiments and cook-in sauces. The processing system includes: at least one moveable receptacle; at least one moveable processing device; and a transfer system.

The transfer system is arranged to move at least one processing device from a storage location to the receptacle; and the processing device is operable to process ingredients located within the receptacle. The transfer system can be arranged to remove at least one processing device from the receptacle.

The invention provides a highly flexible ingredient processing system since the transfer system is arranged to move both the receptacles and the processing devices. This enables many different receptacle-processing device combinations to be achieved, thereby facilitating flexible food manufacture. The invention is easily scalable, since it is possible to increase / decrease the number of receptacles and/or the number of processing devices according to the manufacturing requirements. This is easily achievable because the receptacles are not fixed in place and the processing devices are adapted to be mounted onto the receptacles.

Since a transfer system is provided for moving the receptacles and processing devices, the system can operate with no, or minimal, human intervention during a food manufacturing process. Since there is little or no human input during a food manufacturing process, it is not necessary to build platforms adjacent the receptacles. Furthermore, since the receptacles are moveable, there is no need for an expensive network of piping, valves and pumps to move foodstuffs around.

The processing system includes at least one processing station. In preferred embodiments the processing system includes a plurality of processing stations.

The or each processing station includes a support structure for receiving and supporting receptacles. The or each receptacle is removably mountable to the or each support structure. The transfer system is arranged to move the receptacles to the processing stations, typically one at a time. The transfer system is arranged to removably mount the receptacles to the support structures, typically one at a time. The transfer system is arranged to remove receptacles from the support structures, typically one at a time.

The or each receptacle is movable to an available processing station. The or each receptacle is movable from one processing station to another. Movement of the or each receptacle is very flexible, and is not limited by direction. For example, a system may include first, second and third processing stations. Starting from an initial condition wherein a receptacle is initially mounted at the second processing station, and the first and third stations are available, the receptacle is movable by the transfer system to either one of the first and third processing stations. This renders the second processing station available. Having moved the receptacle to one of the first and third processing stations, the receptacle can be moved by the transfer system to another available processing station, for example the other of the first and third processing stations, or back to an earlier processing station, such as the second processing station. The selection made by the transfer system is determined according to the requirements of the manufacturing process and the availability of any given station.

In preferred embodiments, at least one processing station comprises an ingredient dispensing station. The or each ingredient dispensing station includes at least one ingredient dispensing device. The transfer system is arranged to move at least one receptacle to the dispensing device to receive at least one ingredient therefrom.

In preferred embodiments, at least one processing station comprises an ingredient processing station. At least one of the ingredient processing stations includes at least one processing device for processing the ingredients stored within at least one receptacle. At least some, and preferably each, of the ingredient processing stations includes at least one processing device for processing the ingredients stored within the receptacles.

In preferred embodiments, at least one processing station comprises a discharge station. The discharge station includes at least one vessel. The transfer system is arranged to move at least one receptacle to the discharge station. The transfer system is arranged to pour the contents of at least one receptacle into the vessel.

In preferred embodiments, the system includes a filling machine, arranged to receive processed ingredients, and to dispense predetermined quantities of treated ingredients. Advantageously some embodiments include a controller to control the amount of processed ingredients dispensed by the filling machine.

In preferred embodiments, the system includes packaging apparatus arranged to supply individual items of packaging to the filling machine. Preferably the packaging apparatus includes a transfer system, such as a conveyor, to transfer the individual items of packaging.

Advantageously the packaging apparatus is arranged to seal the individual items of packaging.

In preferred embodiments, at least one processing station comprises a receptacle cleaning station. The or each cleaning station includes at least one cleaning device for washing receptacles. The cleaning device includes a cleaning head. The transfer system is arranged to invert at least one receptacle and mount it over the cleaning device. The weight of the receptacle in its inverted state is supported by a support bracket.

The cleaning head is mounted on a lance, which extends into the receptacle. Water is supplied to the cleaning head via the lance.

The processing stations can be arranged in a linear fashion, for example in a rectilinear arrangement and/or a curvilinear arrangement.

The processing system typically includes N processing stations, where N is in the range 2 to 30.

The processing system includes a plurality of receptacles. The processing system typically includes n receptacles, where n is in the range 2 to 30.

The processing system includes a plurality of processing devices. The processing system typically includes m processing devices, where m is in the range 2 to 30.

In preferred embodiments the or each support structure, includes a receptacle support bracket. In preferred embodiments the or each receptacle includes a mounting bracket. Preferably the or each mounting bracket is releasably attachable to the or each receptacle support bracket. The support structure is arranged to support the weight of the receptacle, its contents, and any processing unit attached thereto. The receptacle is supported above the ground. In preferred embodiments the support structure includes at least one of a wall, support post, and support frame. The receptacle support bracket is attached to at least one of the wall, support post, support frame. The receptacle is suspended above the floor by the interaction of the mounting bracket and the support bracket.

In preferred embodiments each support bracket is similar. In preferred embodiments each mounting bracket is similar. This enables each receptacle to be removably mountable to each support structure.

In preferred embodiments the or each processing device storage location includes a processing device support bracket. In preferred embodiments the or each processing device includes a mounting bracket. The or each mounting bracket is releasably attachable to the or each processing device support bracket. This enables the processing devices to be removably mountable at the storage locations. The transfer system is arranged to removably mount the processing devices to the support brackets, typically one at a time. The transfer system is arranged to remove the processing devices from the support brackets, typically one at a time.

The processing device support bracket is preferably part of the station support structure. In preferred embodiments the processing device support bracket is mounted above the receptacle support bracket. Typically, only some processing stations include processing device support brackets. For example, ingredient filling stations and discharge stations may omit processing device support brackets.

The processing device support bracket can be similar to the receptacle support bracket. The processing device mounting bracket can be similar to the receptacle mounting bracket.

The or each receptacle includes a receptacle lifting bracket. The transfer system is arranged to lift each receptacle via the lifting bracket.

The or each processing device includes a processing device lifting bracket. The transfer system is arranged to lift each processing device via the lifting bracket.

In preferred embodiments the processing device lifting bracket is similar to the receptacle lifting bracket. With this arrangement the transfer system only requires a single engagement tool to lift both the processing devices and the receptacles.

The transfer system includes at least one robotic arm. In preferred embodiments, the robotic arm comprises a six-axis robotic arm. However, other types of robotic arms may be suitable for simpler systems, such as a five-axis arm, four-axis arm or three axis-arm.

The robotic arm includes an engagement tool. The engagement tool is operable to selectively engage and release the receptacle lifting bracket. The engagement tool is operable to selectively engage and release the processing device lifting bracket. In preferred embodiments, the engagement tool is arranged to engage the or each lifting bracket by a substantially vertical movement. This simultaneously engages the lifting bracket and lifts the receptacle and/or processing device.

In preferred embodiments the engagement tool includes an adjustable claw. The claw enables the engagement tool to firmly grip the receptacle and/or processing device. It enables the robotic arm to adjust the orientation of the receptacle and/or processing device. For example, it enables the robotic arm to pour the contents of the receptacle into a further receptacle, packaging apparatus, a drain and/or storage vessel.

In preferred embodiments the robotic arm is moveable translationally along a track. For example, the robotic arm includes a base. The base includes wheels and/or rollers, which are mounted on rails. The robotic arm is moveable along the track bi-directionally. The track provides an additional axis of movement for the robotic arm. The processing stations are distributed along the track.

The robotic arm can include a cleaning lance for cleaning receptacles and/or processing devices. For example, the lance can be arranged to dispense water and wash the receptacles and/or processing devices.

At least one, and preferably each, processing device is arranged to be mounted at an open end of the receptacle. The transfer system is arranged to mount at least one processing device onto the receptacle, at the open end. The open end of the receptacle is typically an upper end of the receptacle when the receptacle is in its normal operating orientation.

At least one, and preferably each, processing device includes a body portion arranged to cover at least part of the open end of the receptacle. The body portion acts as a lid for the receptacle. The body portion substantially covers the open end of the receptacle. This prevents substances stored within the receptacle from escaping when the processing device is operating.

In preferred embodiments the body portion includes an outer side, which faces outwards from the receptacle. In preferred embodiments the body portion includes an inner side, which faces into the receptacle. In preferred embodiments, the body portion is substantially circular in plan view.

In preferred embodiments at least one processing device includes a drive unit. For example, the drive unit can include an electric motor. Preferably the drive unit is located on the outer side of the body portion. The drive unit preferably receives power and/or control signals via at least one cable.

At least a portion of an operative part of the processing device can be located on the inner side of the body portion. At least one operative part is arranged to extend into the receptacle when the body portion is mounted at the open end of the receptacle.

In preferred embodiments the operative part can include at least one rotary element. The rotary element is driven by the drive unit. The rotary member is arranged substantially coaxially with a central axis of the body portion. The body portion includes a through hole. The rotary member protrudes through the through hole and is connected to the drive unit.

In preferred embodiments the processing device includes at least one port which is arranged to allow at least one fluid to be fed into the receptacle. The or each port is located in the body portion. The or each port enables the fluid to be fed into the receptacle, through the body portion, while the body portion is mounted on the open end of the receptacle. Thus fluid can be fed to the port via a supply conduit.

The operative part can include a fluid injector lance which is operatively connected to at least one of the ports. The fluid injector can be arranged to inject hot fluids, such as steam. The fluid injector can be arranged to inject cold fluids, such as cooled water.

The processing device can include at least one of: a heating device; chilling device; blending device, such as an emulsifier and/or homogeniser; cutting device; and a mixing device.

The system can include locking means for releasably locking the processing unit to the receptacle. For example, the transfer system can be arranged to selectively lock the processing unit to the receptacle, and unlock the processing unit from the receptacle. The locking means can include a twist lock arrangement.

In preferred embodiments the processing system includes a control system. The control system is arranged to control operation of the transfer system. The control system is arranged to control operation of the or each processing device. The control system is arranged to control operation of the or each ingredient dispensing device. The control system is programmable. The control system enables an automated food manufacturing process to be undertaken. For example, it enables the robotic arm to be programmed to move the receptacles and processing devices in a required sequence to manufacture a food. This includes moving at least one receptacle to the necessary processing stations and moving at least one processing device into operative engagement with at least one receptacle. Typically it includes moving at least some receptacles to the necessary processing stations and moving at least some processing devices into operative engagement with at least some receptacles.

According to another aspect of the invention there is provided a method for manufacturing foods, such as ready meals, sauces, soups, condiments, cook-in sauces and the like; including providing a processing system according to any configuration described herein; using the robotic arm to move the first receptacle to a first processing station, said first processing station having an ingredient dispensing device; dispensing at least one foodstuff ingredient into the first receptacle; using the robotic arm to move the first receptacle to a second processing station, said second processing station having a food processing device; using the robotic arm to mount the food processing device on the first receptacle; operating the food processing device to process the or each foodstuff ingredient stored in the first receptacle; and using the robotic arm to remove the food processing device from the first receptacle.

The robotic arm mounts the food processing device to a support bracket located at the second processing station.

Processing the or each foodstuff ingredient stored in the first receptacle includes at least one of the following: cooking; blending; homogenising; chilling; mixing; and cutting.

The method can include using the robotic arm to move the first receptacle to a discharge station having a storage vessel, and using the robotic arm to pour the contents of the first receptacle into the storage vessel.

The method can include using the robotic arm to move the first receptacle to the first processing station, or to an additional ingredient dispensing station, said additional ingredient dispensing station having an additional ingredient dispensing device; and dispensing at least one foodstuff ingredient into the first receptacle.

The method can include using the robotic arm to move the first receptacle back to the second processing station; and using the robotic arm to mount the food processing device on the first receptacle. The method can include operating the food processing device to process the or each foodstuff ingredient stored in the first receptacle. The method can include using the robotic arm to remove the food processing device from the first receptacle. The robotic arm mounts the food processing device to a support bracket, for example located at the second processing station.

The method can include using the robotic arm to move the first receptacle to an additional ingredient processing station, said additional ingredient processing station having an additional food processing device; and using the robotic arm to mount the additional processing device on the first receptacle. The method can include operating the additional processing device to process the or each foodstuff ingredient stored in the first receptacle.

The method can include using the robotic arm to remove the additional food processing device, from the first receptacle. The robotic arm mounts the additional food processing device to a support bracket located at the additional processing station.

The method can include providing at least one further receptacle. The robotic arm moves the at least one further receptacle to one of the available ingredient dispensing stations. At least one foodstuff ingredient is dispensed into the at least one further receptacle. The robotic arm moves the at least one further receptacle to one of the available ingredient processing stations. The robotic arm mounts the food processing device on the at least one further receptacle. The food processing device is operated to process the or each foodstuff ingredient stored in the at least one further receptacle; and the robotic arm removes the food processing device from the at least one further receptacle.

Embodiments of the invention will now be described, by way of example only, with reference to the accompanying drawings in which:
Figure 1 is a diagrammatic view of an ingredient processing system in accordance with a first embodiment of the invention;

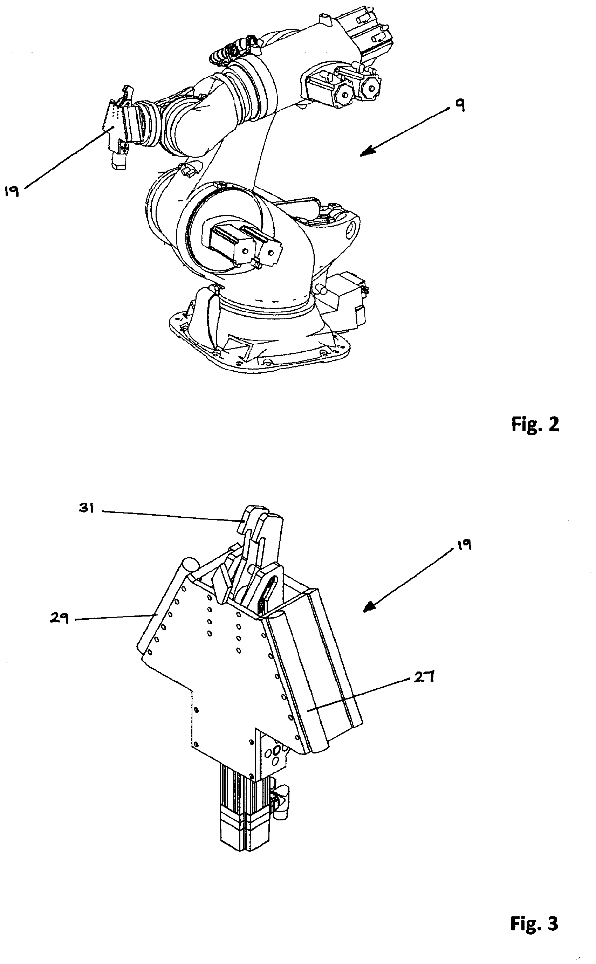

Figure 2 is a view of a robotic arm used in the ingredient processing system of Figure 1;
Figures 3 to 4b are detailed views of an engagement part of the robotic arm of Figure 2;
Figures 5 to 7 are views of a receptacle used in the ingredient processing system of Figure 1;
Figures 8 to 10 are views of an emulsifier processing device used in the ingredient processing system of Figure 1, the emulsifier processing device is used to emulsify ingredients in the receptacle of Figures 4 to 6;
Figures 11 to 13 are views of a steam infusion tool used in the ingredient processing system of Figure 1, the steam infusion tool is used to steam ingredients in the receptacle of Figures 4 to 6;
Figures 14 to 23 are views of the ingredient processing system of Figure 1 during a food manufacturing process; and
Figure 24 is a diagrammatic view of an ingredient processing system in accordance with a second embodiment of the invention.

A processing system 1 according to the invention is provided which is arranged to process foodstuff ingredients to produce foods, such as ready meals, sauces, soups, condiments, cook-in sauces and the like. The food produced is determined by the foodstuff ingredients used and the processing steps undertaken. The system 1 can be used to produce a wide variety of foods.

The processing system 1 includes: at least one processing station 3; at least one receptacle 5; at least one processing device 7; and an automated transfer system, for moving the or each receptacle 5 and the or each processing device 7. The automated transfer system comprises a robotic arm 9, which is preferably mounted on a track 11.

In most practicable embodiments, the processing system 1 includes a plurality of: processing stations 3, receptacles 5 and processing devices 7. The number of receptacles 5A-5G required for a food manufacturing process will vary depending upon the product being manufactured, for example the number of ingredients required and the number of separate processes, and the quantity required. Similarly, the number of processing devices 7A-7D will vary depending on the number of different types of processes, and the requirement for repetition of certain processes.

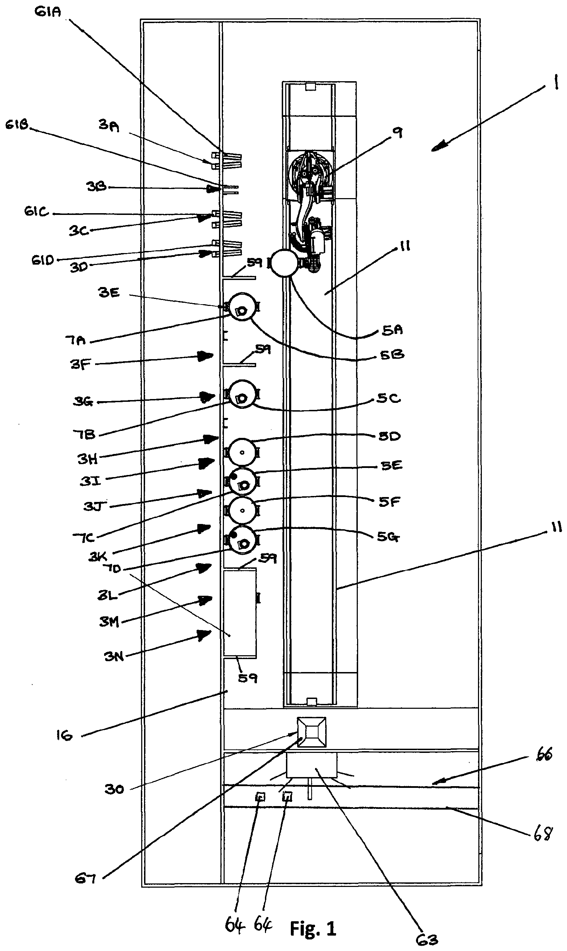

In the embodiment shown in Figure 1, the processing system 1 shown has fifteen processing stations 3A-3O, seven receptacles 5A-5G, and four processing devices 7A-7D.

Processing stations 3A-3D are ingredient filler stations. Each ingredient filler station includes a dispensing device 61A-61D. Each dispensing device 61A-61D is arranged to dispense ingredients into a receptacle 5 positioned below the dispensing device 61A-61D. Ingredients can be inserted into receptacles 5 automatically or manually. Typically, each dispensing device 61A-61D dispenses different ingredients. However it will be appreciated that under some circumstances, it may be desirable to have more than one dispensing device 61A-61D dispense the same ingredient.

Processing stations 3E-3L are ingredient treatment stations. The ingredient treatment stations 3E-3L are locations where food treatments processes, such as cooking, blending, mixing, cooling (active or otherwise), cutting, etc., are applied to ingredients stored in the receptacles 5A-5G. The ingredient treatment stations 3E-3L have ingredient processing devices 7A-7D associated therewith. The processing devices 7A-7D are arranged to perform food processing operations on the ingredients stored in the receptacles 5A-5G, as described in more detail below.

Processing stations 3M-3N are cleaning stations. Each receptacle cleaning station 3M-3N includes a cleaning device 65 arranged to clean the receptacles 5A-5G.

Processing station 3O is a discharge station. The discharge station 3O is a station where the contents of a receptacle can be poured from the receptacle 5A-5G into a vessel 67. The vessel 67 can be, for example an intermediate storage vessel, packaging, a packaging machine, a drain, or a further processing device. The discharge station 3O obviates the need for each receptacle 5A-5G to include a discharge valve and piping for transferring the contents of the receptacle 5A-5G to the vessel 67.

Optionally, similar processing stations can be grouped together, and different types of stations may be separated, for example by partitions 59.

Each processing station 3A-3O includes a support structure for receiving and supporting the receptacles 5A-5G, one at a time. The support structure includes a support bracket 15A-15O mounted onto a wall 16. The receptacles 5A-5G are removably mountable to the support brackets 15A-150. The support structure is arranged to support the weight of the receptacle 5A-5G, its contents, and any processing unit 7A-7D attached thereto. The receptacle 5A-5G is supported above the ground. Each support bracket 15A-150 is similar.

At least some of the processing stations 3E-3L include a support structure for receiving and supporting processing devices 7A-7D, one at a time. The support structure includes a bracket 35E-35L mounted on the wall 16. Preferably the processing device support brackets 35E-35L are mounted on the wall 16 above their respective receptacle support brackets 15E-15L. The processing device support brackets 35E-35L provide storage locations for processing devices 7A-7D. Each processing device support bracket 35E-35L is similar.

The processing device support brackets 35E-35L can be similar to the receptacle support brackets 15A-15O. This simplifies manufacture of the brackets 15A-15O,35E-35L.

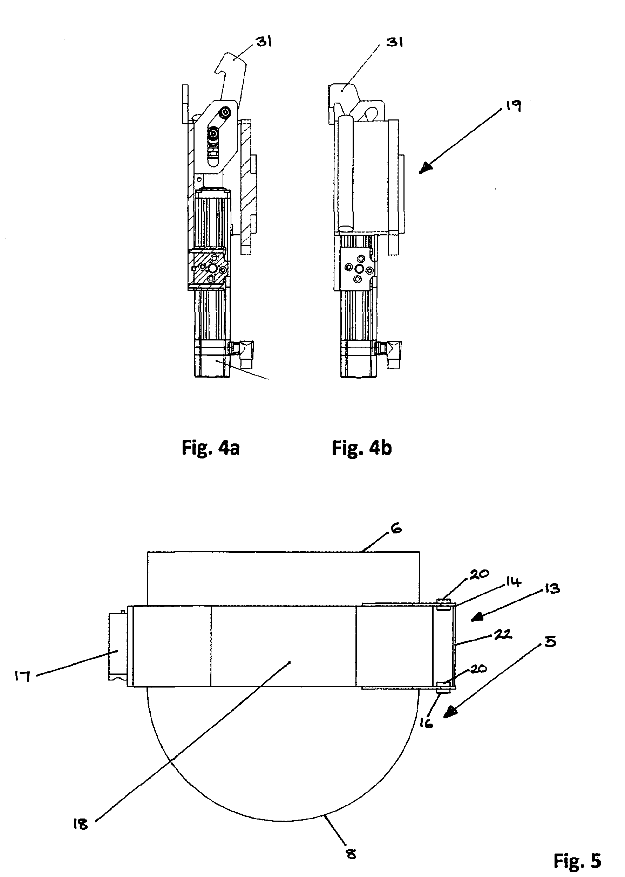

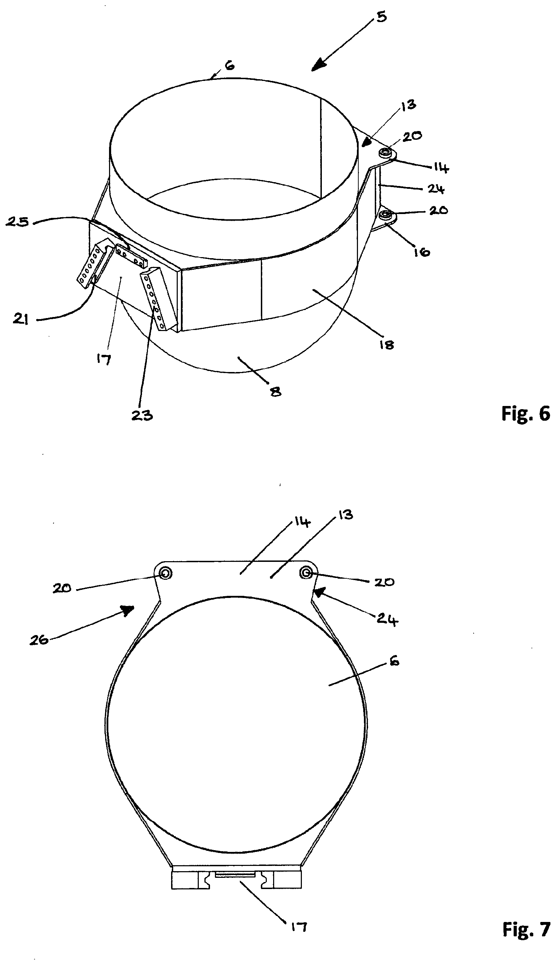

Each receptacle 5A-5G is similar, and is in the form of a cooking pan. Detailed views of one of the receptacles 5A-5G are shown in Figures 5 to 7.

Each receptacle 5A-5G has an open top 6. Each receptacle 5A-5G has a substantially cylindrical form, and has a domed base 8 for ease of cleaning. Each receptacle 5A-5G is typically made from stainless and is arranged to carry a batch size of around 500kg to 750kg.

Each receptacle 5A-5G includes a mounting bracket 13. The mounting bracket 13 is releasably attachable to the support bracket 15A-15O located at the processing station 3A-3O where the receptacle 5A-5G is positioned. Since each support bracket 15A-15O is similar, any given receptacle 5A-5G can be removably mounted to the support structure at each of the processing stations 3A-3O, according to processing needs and station 3A-3O availability. A processing station 3A-3O is available if no other receptacle 5A-5G is already positioned there.

The mounting bracket 13 includes first and second flanges 14,16, which protrude radially outwards from the curved surface 18 of the of the receptacle. The first and second flanges 14,16 are arranged substantially parallel with one another, and the first flange 14 overlies the second flange 16. Each flange 14,16 includes a pair of protrusions 20. Plates 22,24,26 support the flanges 14,16. The flanges 14,16 and protrusions are arranged to releasably engage formations in the support brackets 15A-15O.

The receptacle is suspended above the floor by the interaction of the mounting bracket and the support bracket.

Each receptacle 5A-5G includes a lifting bracket 17 which is configured for engagement with a robotic arm connector 19. The robotic arm 9 is able to releasably engage the receptacle 5A-5G by releasably connecting the connector 19 to the lifting bracket 17.

The lifting bracket 17 includes first and second inclined channels 21,23. The first and second inclined channels 21,23 are arranged in the same plane and are spaced apart. The arrangement is similar to the inclined sides of a trapezium. The lifting bracket 17 includes a horizontal channel 25.

The connector 19 includes first and second inclined ribs 27,29 which are arranged to engage the first and second inclined channels 21,23 respectively. The connector 19 also includes a claw 31 which is arranged to selectively engage and disengage the horizontal channel 25. The arrangement of the connector 19 and bracket 17, is such that the robotic arm 9 is able to adjust the orientation of the receptacle 5, without disengaging receptacle 5A,5G. This enables the receptacle 5A-5G to be tilted, for example to pour its contents out of the receptacle 5A-5G, and can be fully inverted (open end 6 facing downwards) for cleaning purposes.

By engaging a receptacle 5A-5G with the connector 19, the robotic arm 9 is able to move any given receptacle 5A-5G to an available processing station 3A-3O.

The processing devices 7A-7D are used to treat the ingredients to transform them into a food product. A wide variety of different processing devices 7A-7D can be used in a food manufacturing process. For example, mixers, homogenisers, emulsifiers, heating devices, cooling devices, and cutters. The number and type of devices required depends on the food being produced and the amount required.

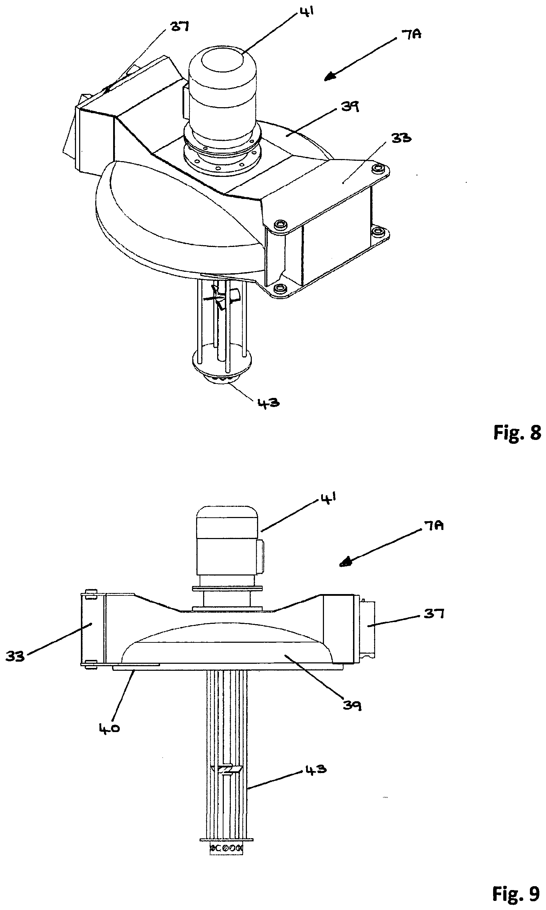

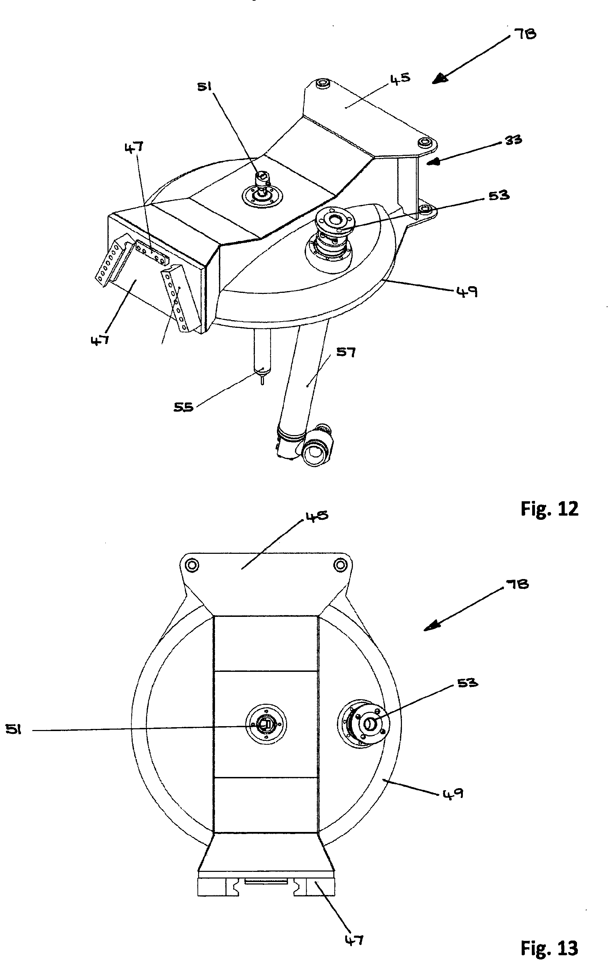

Two different types of processing device 7A,7B are shown in Figures 8 to 13.

Each processing device 7A-7D includes a mounting bracket 33. The mounting bracket 33 is releasably attachable to the support bracket 35E-35L located at the processing stations 3E-3L where the processing device 7A-7D is positioned. Since each support bracket 35E-35L is similar, any given processing device 7A-7D can be removably mounted to the support structure at each of the processing stations 3E-3L, according to processing needs and station 3E-3O availability.

Each processing device 7A-7D includes a lifting bracket 37, which is arranged similarly to the lifting bracket 17 included in the receptacle 5A-5G. The robotic arm 9 is able to selectively engage and disengage the lifting bracket 37. In the engaged condition, the robotic arm 9 is able to move the processing device 7A-7D. For example, the robotic arm is able to move the processing device 7A-7D from the storage location 35E-35L onto a receptacle 5A-5G and from the receptacle 5A-5G back to the storage location 35E-35L. The robotic arm 9 is able to move the processing device 7A-7D from one storage location 35E-35L to another storage location 35E-35L. The robotic arm 9 is able to move the processing device 7A-7D from one receptacle 5A-5G to another receptacle 5A-5G.

The processing device 7A-7D is removably mounted on the receptacle 5A-5G. When the processing device 7A-7D is mounted on the receptacle 5A-5G, the processing device 7A-7D is operable to process ingredients stored in the receptacle 5A-5G. Preferably, the lid is arranged 39,49 to provide a sufficiently effective seal with the receptacle 5A-5G to prevent ingredients from leaking out of the receptacle 5A-5G when a process is performed. Optionally, a locking mechanism (not shown) can be provided, which releasably locks the processing device 7A-7D to the receptacle 5A-5G. For example, the lid 39,49 can be arranged for a twist fit connection with the receptacle 5A-5G. The robotic arm 9 locks the processing device to receptacle by rotating the processing device with respect to the receptacle, and unlocks by rotating it in the opposite direction. Alternatively, a separate locking mechanism can be provided, which is actuatable automatically.

The processing device 7A shown in Figures 8 to 10 is an emulsifying tool. The emulsifying tool includes, in addition to the mounting bracket 33 and lifting bracket 37, a lid 39 for mounting on and closing off the open end 6 of the receptacle, a drive unit 41 mounted on an upper side of the lid 39 and an emulsifying tool 43 located on a lower side of the lid 39. Cables (not shown) are connected to the processing device 7A-7D to provide power and control signals to the drive unit 41. The lid 39 includes a lip 40 for engaging an inner surface of the receptacle.

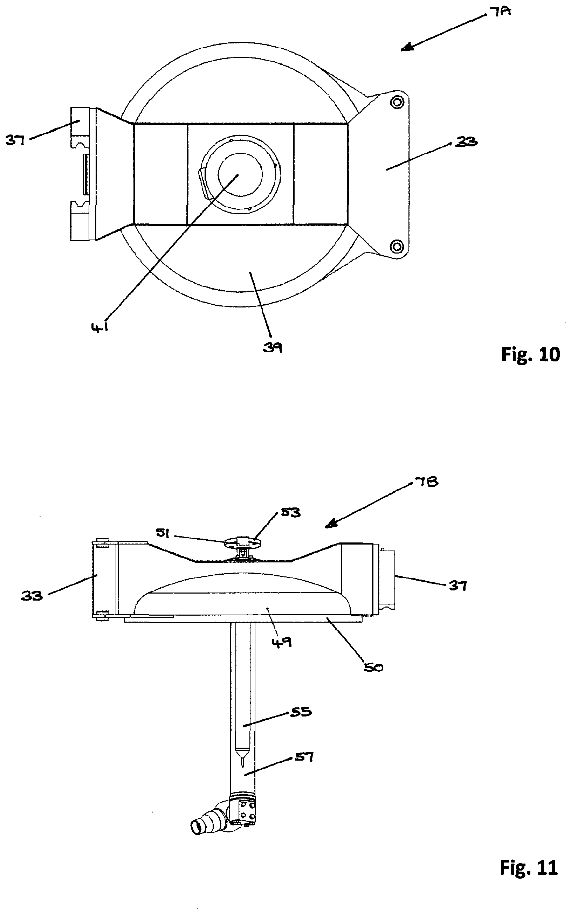

The processing device 7B shown in Figures 11 to 13 is a steam infusion device. The steam infusion device includes, in addition to the mounting bracket 33 and lifting bracket 37, a lid 49 for mounting on and closing off the open end 6 of the receptacle, first and second injection ports 51,53 located on an upper side of the lid 49, and first and second injectors 55,57 located on a lower side of the lid 49. Injectable fluids, such as steam, are connected to the first and second ports 51,53 via appropriate conduits (not shown). The lid 49 includes a lip 50 for engaging an inner surface of the receptacle.

The processing device mounting bracket 33 can be similar to the receptacle mounting bracket 13.

The robotic arm 9 is preferably a 6-axis robotic arm, which is used to selectively grip the receptacles 5A-5G and to move them from one processing station 3A-3O to another processing station 3A-3O according to the requirements of the food manufacturing process. The robotic arm 9 is also used to move the processing devices 7A-7G from their storage locations 35E-35L into their operating positions with respect to the receptacles 5A-5G.

The robotic arm 9 is mounted on the track 11. The track 11 is typically rectilinear and is arranged substantially parallel to the processing stations 3A-3O, which themselves are arranged in a substantially rectilinear arrangement. The robotic arm 9 can move along the rails 11, bi-directionally, to position itself adjacent the appropriate station 3A-3O in order to interact with the receptacle 5A-5G and/or processing device 7A-7D located at that station 3A-3O.

Movement of the receptacles 5A-5G, and processing devices 7A-7D is very flexible, and is not limited by direction. For example, for a system 1 having first, second and third processing stations arranged in a line (rectilinear or curvilinear), a receptacle initially mounted at the second processing station is movable by the transfer system to either one of the first and third processing stations. Having selected one of the first and third processing stations the receptacle can be moved by the transfer system to a new processing station (the other of the first and third processing stations), or back to an earlier processing station (the second processing station), according to the requirements of the manufacturing process.

A programmable computer controller is provided to fully automate movement of the robotic arm 9. A programmable computer controller can be provided to control operation of the dispensing devices 61A-61D. A programmable computer controller can be provided to control operation of the processing devices 7A-7D. One or more of the programmable controllers can be integrated into a single package. Thus operation of the system 1 can be automated. Thus labour input is reduced to a minimum. This enables the factory to operate in a lights out mode.

A computer system can be provided to monitor operation of the manufacturing apparatus, and where applicable, provide data to one or more of the programmable controllers. The computer system can provide a central system for recipes, data logging, scheduling, and reporting. For example, each recipe can have a bill of materials, which defines the ingredients required, the quantities, the receptacles required, the processing devices required, timing information and the sequence of events. Where a number of food manufacturing processes, or batches of the same food, are required, the computer system can be used to schedule each process, or batch, to ensure that sufficient resources are available to complete the process. During a process, data relating to the processes carried out can be logged and stored for traceability purposes.

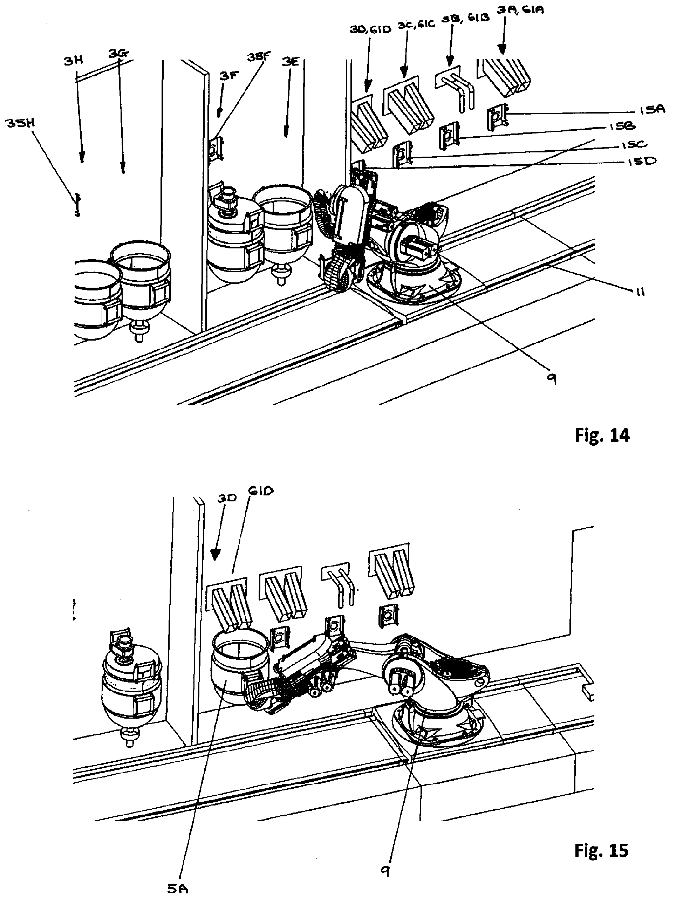

A food manufacturing process will now be described with reference to Figures 14 to 23.

Figure 14 shows the robotic arm 9 in a rest position.

Figure 15 shows the robotic arm 9 moving a receptacle 5A to an ingredient dispensing station 3D. The robotic arm 9 releasably attaches the receptacle mounting bracket 13 to the support bracket 15D. Ingredients are dispensed into the receptacle 5A.

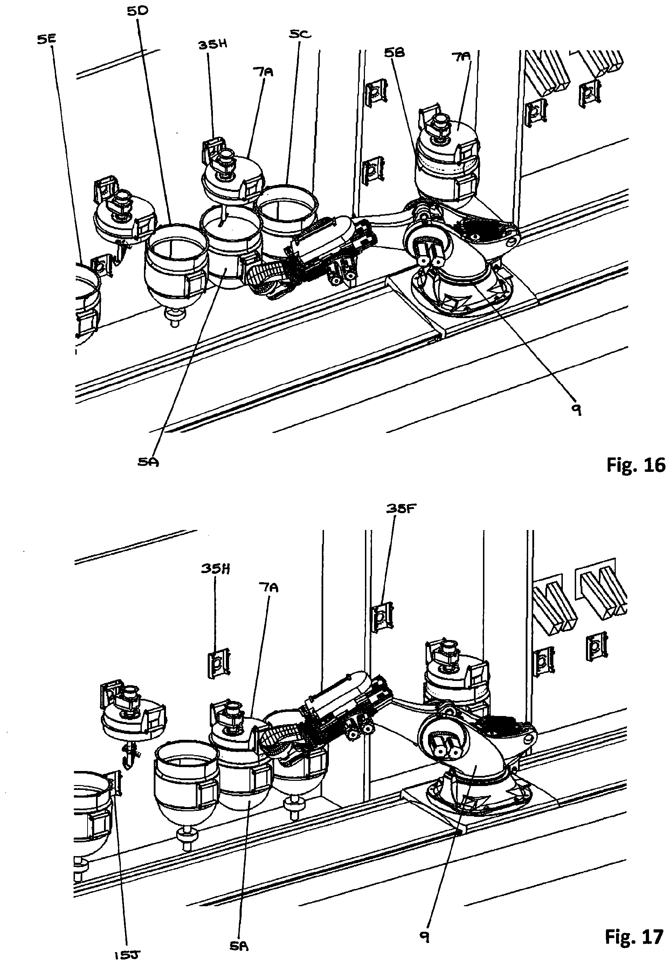

In Figure 16, the robotic arm 9 has moved along the track 11, and has moved the receptacle 5A to an available treatment station 3H. The robotic arm 9 releasably attaches the receptacle mounting bracket 13 to the support bracket 15H.

Figure 17 shows the robotic arm 9 moving the processing device 7A from its storage location 35H onto the receptacle 5A. The processing device 7A is actuated to emulsify the ingredients stored in the receptacle 5A. When the process is completed, the robotic arm 9 removes the processing device 7A and returns it to its storage location 35H.

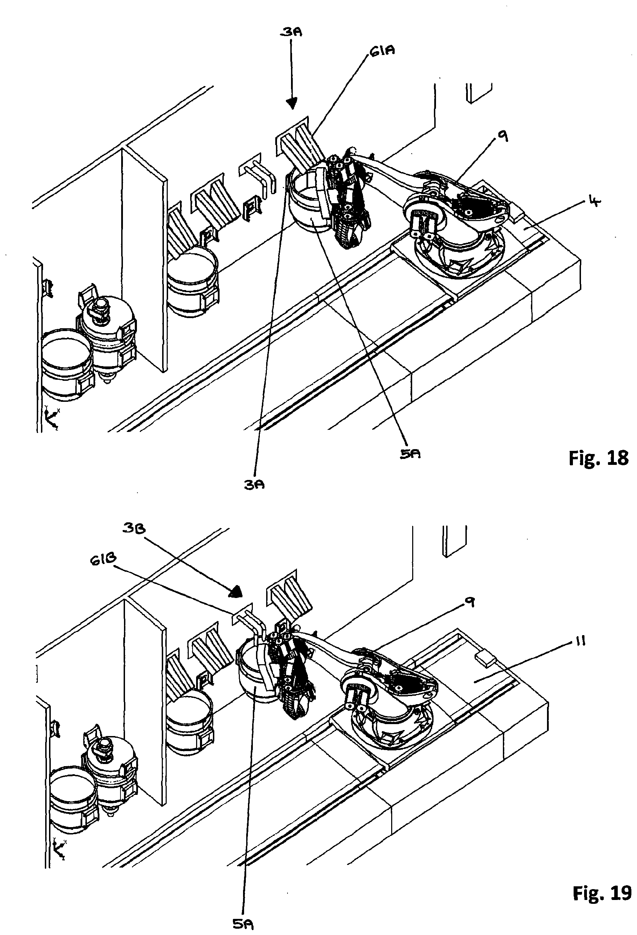

Figure 18 shows the robotic arm 9 moving the receptacle 5A to filling station 3A, to receive further ingredients. The robotic arm 9 releasably attaches the receptacle mounting bracket 13 to the support bracket 15A. Ingredients are dispensed into the receptacle 5A.

Figure 19 shows the robotic arm 9 moving the receptacle 5A to filling station 3B, to receive yet further ingredients. The robotic arm 9 releasably attaches the receptacle mounting bracket 13 to the support bracket 15B. Ingredients are dispensed into the receptacle 5A.

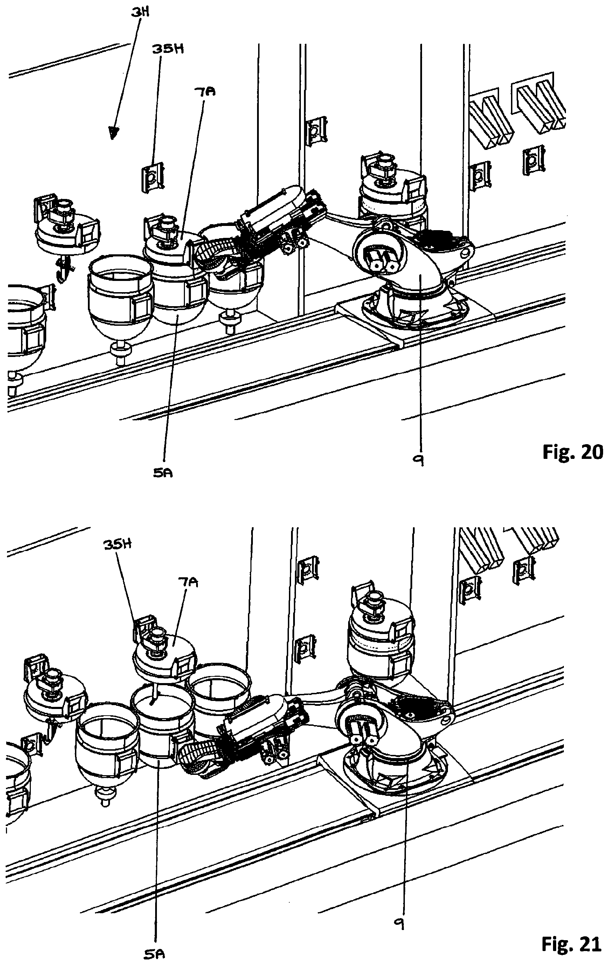

In Figure 20, the robotic arm 9 has moved along the track 11, and has moved the receptacle 5A to an available treatment station, which in this case has returned to station 3H (of course any other available treatment station can be used, for example it may be necessary to select one having a different processing device 7B-7D). The robotic arm 9 releasably attaches the receptacle mounting bracket 13 to the support bracket 15H. The robotic arm 9 moves the processing device 7A from its storage location 35H onto the receptacle 5A. The processing device 7A is actuated to emulsify the ingredients stored in the receptacle 5A.

When the process is completed, the robotic arm 9 removes the processing device 7A and returns it to its storage location 35H (see Figure 21).

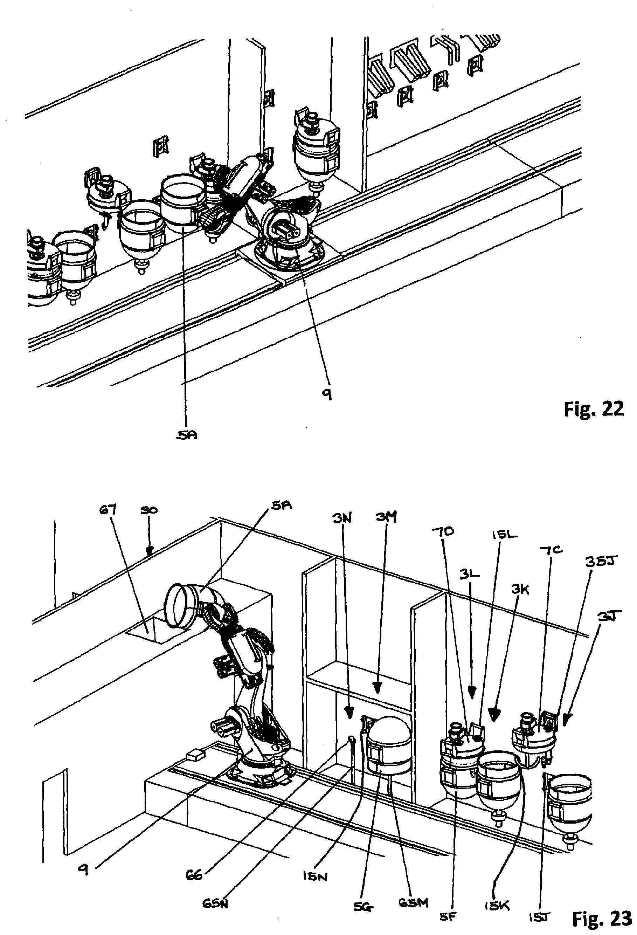

Figure 22 shows the robotic arm 9 removing the receptacle 5A from station 3H.

Figure 23 shows the robotic arm 9 moving the receptacle 5A to the discharge station 3O. The robotic arm 9 pours the contents of the receptacle 5A into vessel 67, which is a filler machine 63 for packaging purposes. The filler machine 63 supplies processed food to items of packaging 64, which are supplied by packaging apparatus 66. The packaging apparatus typically includes a transfer system, such as a conveyor belt 68, to transfer individual items of packaging 64 towards and away from the filler machine 63. The filler machine 63 dispenses a predetermined quantity of the foodstuff into each individual item of packaging 64 and the packaging apparatus 66 seals the individual items of packaging to protect the food stored therein.

While the above example tracks the movement of one receptacle 5A, it will be appreciated that while the receptacle 5A is static, for example during a food treatment process, or when the ingredients are cooling, the robotic arm 9 can move at least one other receptacle 5B-5G and/or move a processing device 7A-7D into engagement with at least one other receptacle 5B-5G. Thus multiple batches of the food can be prepared simultaneously, albeit that each batch is at a slightly different stage in the process.

During a food manufacturing process, or at the end of the process, the robotic arm 9 can move one or more receptacles 5A-5G to the cleaning stations 3M-3N (see Figure 23). The receptacles 5A-5G are inverted and mounted over a cleaning device 65. The receptacles 5A-5G are removably attached to the local support structures 15M,15N. The cleaning device 65 comprises a lance having a spray head 66 located at one end. The cleaning device 65 sprays water into the receptacles 5A-5G to wash away and residues. Drains are provided at the cleaning stations 3M-3N.

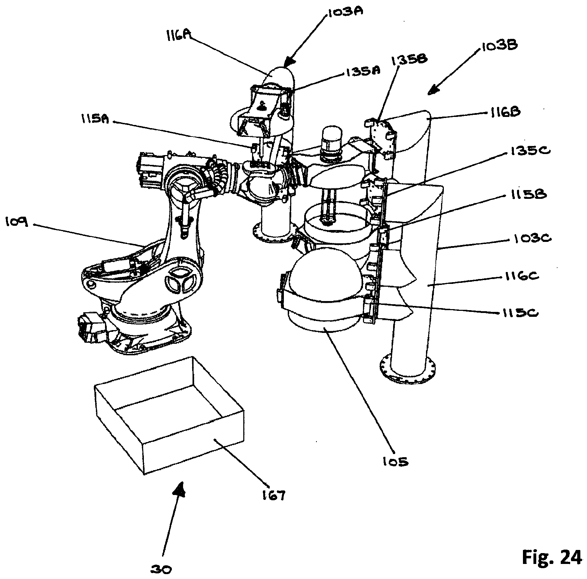

A second embodiment is shown in Figure 24 with just four processing stations 103 for illustrative purposes. The second embodiment is similar to the first embodiment except that the robotic arm 109 is not mounted on tracks and the processing stations 103A-D are distributed curvilinearly about the robotic arm 109, for example on a pitch circle.

Furthermore, the support brackets 113A-C,135A-C are mounted on posts 116A-C rather than a wall.

Station 103D is a floor mounted discharge station having a vessel 167. The robotic arm 116 is arranged to pour the contents of a receptacle 105 into the vessel 167.

Although the present invention has been described in connection with specific preferred embodiments, it should be understood that the invention as claimed should not be unduly limited to such specific embodiments. Furthermore, it will be apparent to the skilled person that modifications can be made to the above embodiment that fall within the scope of the invention.

For example, any practicable number of processing stations 3 can be used. The number of processing stations 3 provided is determined by the scale of the manufacturing operation, and the manufacturing flexibly required by the manufacturer. Typically, the system 1 includes at least two processing stations 3. Preferably the system 1 includes at least four processing stations 3, more preferably at least six processing stations 3, more preferably still at least eight processing stations. There is no upper limit. However a typically system may include up to 30 processing stations 3.

The food processing system 1 typically includes at least one ingredient dispensing station 3, at least one food treatment station 3, and at least one discharge station 3.

In most practicable embodiments, the processing system 1 includes a plurality of receptacles 5. Any practicable number of receptacles 5 can be used. The number of receptacles 5 provided is determined by the scale of the manufacturing operation, and the manufacturing flexibly required by the manufacturer. Typically, the system 1 includes at least two receptacles 5. Preferably the system 1 includes at least four receptacles 5, more preferably at least six receptacles 5, more preferably still at least eight receptacles 5. There is no upper limit. However a typically system may include up to 30 receptacles 5.

In most practicable embodiments, the processing system 1 includes a plurality of processing devices 7. Any practicable number of processing devices 7 can be used. The number of processing devices 7 provided is determined by the scale of the manufacturing operation and the manufacturing flexibly required by the manufacturer. Typically, the system 1 includes at least two processing devices 7. Preferably the system 1 includes at least four processing devices 7, more preferably at least six processing devices 7, more preferably still at least eight processing devices 7. There is no upper limit. However a typically system may include up to 30 processing devices 7.

Receptacle bases 8 can be tapered rather than domed.

For large scale operations it may not be practicable to use a single robotic arm 9 to undertake all of the necessary operations. Accordingly, one or more additional robotic arms 9 can be provided.

While the embodiments described make reference to foodstuff ingredients for producing foods, and the apparatus is particularly suited to food manufacture, it will be appreciated by the skilled person that non-food ingredients can be loaded into the pans and treated with processing apparatus. Accordingly, the apparatus may have application in non-food industries.

## Claims

1. An ingredient processing system (1) for manufacturing a food, including: at least one moveable receptacle (5, 5A-5G) including a first lifting bracket (17); at least one moveable processing device (7A-7D) including a second lifting bracket (37); and a transfer system including at least one robotic arm (9) and a control system for controlling operation of the robotic arm; wherein the robotic arm includes an engagement tool, which is operable to selectively engage and release the lifting brackets, the robotic arm is arranged to lift and move at least one receptacle via the first lifting bracket; the robotic arm is arranged to lift and move the at least one processing device via its second lifting bracket from a storage location (35E-35L) to the at least one receptacle; the processing device is operable to process ingredients located within the at least one receptacle; and the robotic arm is arranged to remove the processing device from the at least one receptacle; wherein the at least one receptacle includes an open end arranged to receive the at least one processing device, and the at least one processing device is arranged to be mounted on the at least one receptacle, at the open end, wherein the at least one processing device includes a body portion arranged as a lid (39, 49) for substantially closing the open end of the at least one receptacle, and a tool element for processing ingredients is located on an inner side of the body portion, and protrudes therefrom, wherein the tool element is arranged to extend into the at least one receptacle when the body portion is mounted on the open end of the at least one receptacle.

2. A system according to claim 1, including at least one processing station having a support structure for receiving and supporting the at least one receptacle; wherein the at least one receptacle is removably mountable to the support structure; the support structure includes a support bracket; the at least one receptacle includes a mounting bracket, the mounting bracket is releasably attachable to the support bracket; and the robotic arm is arranged to removably mount the at least one receptacle to the support structure via the mounting bracket.

3. A system according to any one of the preceding claims, wherein the at least one processing device includes a mounting bracket, wherein the mounting bracket is removably attachable to at least one processing device storage location support bracket, and the robotic arm is arranged to removably mount the at least one processing device to the at least one support bracket.

4. A system according to any one of the preceding claims, wherein the at least one receptacle includes a domed or tapered base.

5. A system according to any one of the preceding claims, wherein the body portion includes at least one fluid connector port mounted on the body portion.

6. A system according to any one of the preceding claims, wherein the tool element includes at least one of: a blending device, such as an emulsifier and/or homogeniser; cutting device; a mixing device and a fluid injector lance.

7. A system according to any one of the preceding claims, including a drive unit operatively connected to the tool element.

8. A system according to any one of the preceding claims, wherein the at least one processing device includes at least one of: a heating device and a chilling device.

9. A system according to any one of the preceding claims, including a plurality of receptacles; and/or a plurality of processing devices.

10. A system according to any one of the preceding claims, including a plurality of processing stations, wherein at least one processing station comprises an ingredient dispensing station and includes at least one ingredient dispensing device, and the robotic arm is arranged to move the at least one receptacle to the dispensing device to receive at least one ingredient therefrom; at least one processing station comprises an ingredient processing station having at least one processing device for processing the ingredients stored within at least one receptacle; at least one processing station comprises a discharge station, and the robotic arm is arranged to move at least one receptacle to the discharge station and to pour the contents of at least one receptacle into a storage vessel; and/or at least one processing station comprises a receptacle cleaning station and includes at least one cleaning device for washing receptacles, wherein the cleaning device includes at least one cleaning head, wherein the robotic arm is arranged to invert the receptacle and mount it over the cleaning head.

11. A system according to any one of the preceding claims, including a filling machine, arranged to receive processed ingredients, and to dispense predetermined quantities of processed ingredients; and/or packaging apparatus arranged to supply individual items of packaging to the filling machine, and preferably the packaging apparatus is arranged to seal the individual items of packaging.

12. A method for manufacturing food, including providing an ingredient processing system according to any one of the preceding claims; using the robotic arm to move a first receptacle to a first processing station, said first processing station having an ingredient dispensing device; dispensing at least one foodstuff ingredient into the first receptacle; using the robotic arm to move the first receptacle to a second processing station, said second processing station having a food processing device; using the robotic arm to mount the food processing device on the first receptacle; operating the food processing device to process the or each foodstuff ingredient stored in the first receptacle; and using the robotic arm to remove the food processing device from the first receptacle.

13. A method according to claim 12, including using the robotic arm to move the first receptacle to a third processing station, said third processing station comprising a discharge station having a vessel; and using the robotic arm to pour the contents of the first receptacle into the vessel; using the robotic arm to move the first receptacle to an additional ingredient dispensing station, said additional ingredient dispensing station having an additional ingredient dispensing device; and dispensing at least one foodstuff ingredient into the first receptacle; and/or using the robotic arm to move the first receptacle to an additional ingredient processing station, said additional ingredient processing station having an additional processing device; using the robotic arm to mount the additional processing device on the first receptacle; operating the additional processing device to process the or each foodstuff ingredient stored in the first receptacle; and using the robotic arm to remove the additional processing device from the first receptacle.

14. A method according to claim 12 or 13, including providing at least one further receptacle; using the robotic arm to move the at least one further receptacle to one of the available ingredient dispensing stations; dispensing at least one foodstuff ingredient into the at least one further receptacle; using the robotic arm to move the at least one further receptacle to one of the available ingredient processing stations; using the robotic arm to mount the processing device on the at least one further receptacle; operating the food processing device to process the or each foodstuff ingredient stored in the at least one further receptacle; and using the robotic arm to remove the food processing device from the at least one further receptacle.

15. A method according to any one of claims 12 to 14, including providing a filling machine having a controller, and packaging apparatus; said filling machine being operatively connected to the discharge station and arranged to receive foodstuffs therefrom; delivering foodstuffs to the filling machine; the packaging apparatus delivering individual items of packaging to the filing machine; the filling machine dispensing predetermined quantities of foodstuff into the individual items of packaging; and the packaging apparatus sealing the individual items of packaging.

## Patentansprüche

1. System (1) zur Verarbeitung von Inhaltsstoffen zum Herstellen eines Lebensmittels, das Folgendes enthält: mindestens einen beweglichen Behälter (5, 5A-5G), der eine erste Hubhalterung (17) enthält; mindestens eine bewegliche Verarbeitungsvorrichtung (7A-7D), die eine zweite Hubhalterung (37) enthält; und ein Transfersystem, das mindestens einem Roboterarm (9) enthält, und ein Steuersystem zum Steuern des Betriebs des Roboterarms; wobei der Roboterarm ein Eingriffswerkzeug enthält, das dazu betrieben werden kann, die Hubhalterungen selektiv in Eingriff zu bringen und freizugeben, der Roboterarm dazu angeordnet ist, mindestens einen Behälter über die erste Hubhalterung zu heben und zu bewegen; der Roboterarm dazu angeordnet ist, die mindestens eine Verarbeitungsvorrichtung über ihre zweite Hubhalterung zu heben und von einem Aufbewahrungsort (35E-35L) zu dem mindestens einen Behälter zu bewegen; die Verarbeitungsvorrichtung dazu betrieben werden kann, Inhaltsstoffe zu verarbeiten, die sich in dem mindestens einen Behälter befinden; und der Roboterarm dazu angeordnet ist, die Verarbeitungsvorrichtung aus dem mindestens einen Behälter zu entfernen; wobei der mindestens eine Behälter ein offenes Ende enthält, das dazu angeordnet ist, die mindestens eine Verarbeitungsvorrichtung aufzunehmen, und die mindestens eine Verarbeitungsvorrichtung dazu angeordnet ist, an dem mindestens einen Behälter an dem offenen Ende montiert zu werden, wobei die mindestens eine Verarbeitungsvorrichtung einen Körperabschnitt enthält, der im Wesentlichen als Deckel (39, 49) angeordnet ist, um im Wesentlichen das offene Ende des mindestens einen Behälters zu verschließen, und sich ein Werkzeugelement zum Verarbeiten von Inhaltsstoffen an einer Innenseite des Körperabschnitts befindet und von diesem hervorsteht, wobei das Werkzeugelement dazu angeordnet ist, sich in den mindestens einen Behälter zu erstrecken, wenn der Körperabschnitt am offenen Ende des mindestens einen Behälters montiert ist.

2. System nach Anspruch 1, das mindestens eine Verarbeitungsstation enthält, die eine Stützstruktur zum Aufnehmen und Stützen des mindestens einen Behälters aufweist; wobei der mindestens eine Behälter lösbar an der Stützstruktur montierbar ist; die Stützstruktur eine Stützhalterung enthält; der mindestens eine Behälter eine Montagehalterung enthält, die Montagehalterung lösbar an der Stützhalterung anbringbar ist; und der Roboterarm dazu angeordnet ist, den mindestens einen Behälter über die Montagehalterung lösbar an der Stützstruktur zu montieren.

3. System nach einem der vorhergehenden Ansprüche, wobei die mindestens eine Verarbeitungsvorrichtung eine Montagehalterung enthält, wobei die Montagehalterung lösbar an mindestens einer Stützhalterung des Aufbewahrungsorts der Verarbeitungsvorrichtung anbringbar ist und der Roboterarm dazu angeordnet ist, lösbar die mindestens eine Verarbeitungsvorrichtung an der mindestens einen Stützhalterung zu montieren.

4. System nach einem der vorhergehenden Ansprüche, wobei der mindestens eine Behälter eine gewölbte oder sich verjüngende Basis enthält.

5. System nach einem der vorhergehenden Ansprüche, wobei der Körperabschnitt mindestens einen Fluidverbindungsanschluss enthält, der an dem Körperabschnitt montiert ist.

6. System nach einem der vorhergehenden Ansprüche, wobei das Werkzeugelement mindestens eines von Folgenden enthält: eine Mischvorrichtung, wie eine Emulgiermaschine und/oder Homogenisiermaschine; eine Schneidvorrichtung; eine Mixvorrichtung und eine Fluidinj ektorlanze.

7. System nach einem der vorhergehenden Ansprüche, das eine Antriebseinheit enthält, die mit dem Werkzeugelement wirkverbunden ist.

8. System nach einem der vorhergehenden Ansprüche, wobei die mindestens eine Verarbeitungsvorrichtung mindestens eines von Folgenden enthält: eine Erhitzungsvorrichtung und eine Kühlvorrichtung.

9. System nach einem der vorhergehenden Ansprüche, das mehrere Behälter; und/oder mehrere Verarbeitungsvorrichtungen enthält.

10. System nach einem der vorhergehenden Ansprüche, das mehrere Verarbeitungsstationen enthält, wobei mindestens eine Verarbeitungsstation eine Abgabestation für Inhaltsstoffe umfasst und mindestens eine Abgabevorrichtung für Inhaltsstoffe enthält, und der Roboterarm dazu angeordnet ist, den mindestens einen Behälter zu der Abgabevorrichtung zu bewegen, um mindestens einen Inhaltsstoff von dieser zu erhalten; mindestens eine Verarbeitungsstation eine Verarbeitungsstation für Inhaltsstoffe umfasst, die mindestens eine Verarbeitungsvorrichtung zum Verarbeiten der in mindestens einem Behälter aufbewahrten Inhaltsstoffe aufweist; mindestens eine Verarbeitungsstation eine Entleerungsstation umfasst, und der Roboterarm dazu angeordnet ist, mindestens einen Behälter zu der Entleerungsstation zu bewegen und den Inhalt von mindestens einem Behälter in ein Aufbewahrungsgefäß zu gießen; und/oder mindestens eine Verarbeitungsstation eine Behälterreinigungsstation umfasst und mindestens eine Reinigungsvorrichtung zum Reinigen von Behältern enthält, wobei die Reinigungsvorrichtung mindestens einen Reinigungskopf enthält, wobei der Roboterarm dazu angeordnet ist, den Behälter umzudrehen und über dem Reinigungskopf zu montieren.

11. System nach einem der vorhergehenden Ansprüche, das eine Abfüllmaschine, die dazu angeordnet ist, verarbeitete Inhaltsstoffe aufzunehmen und vorbestimmte Mengen verarbeiteter Inhaltsstoffe abzugeben; und/oder eine Verpackungseinrichtung enthält, die dazu angeordnet ist, der Abfüllmaschine einzelne Verpackungseinheiten zuzuführen, und vorzugsweise ist die Verpackungseinrichtung dazu angeordnet, die einzelnen Verpackungseinheiten zu versiegeln.

12. Verfahren zum Herstellen von Lebensmitteln, das das Bereitstellen eines Systems zur Verarbeitung von Inhaltsstoffen gemäß einem der vorhergehenden Ansprüche; das Verwenden des Roboterarms zum Bewegen eines ersten Behälters zu einer ersten Verarbeitungsstation, wobei die erste Verarbeitungsstation eine Abgabevorrichtung für Inhaltsstoffe aufweist; das Abgeben mindestens eines Nahrungsmittelinhaltsstoffs in den ersten Behälter; das Verwenden des Roboterarms zum Bewegen des ersten Behälters zu einer zweiten Verarbeitungsstation, wobei die zweite Verarbeitungsstation eine Verarbeitungsvorrichtung für Lebensmittel aufweist; das Verwenden des Roboterarms zum Montieren der Verarbeitungsvorrichtung für Lebensmittel an dem ersten Behälter; das Betreiben der Verarbeitungsvorrichtung für Lebensmittel zum Verarbeiten des oder aller in dem ersten Behälter aufbewahrten Nahrungsmittelinhaltsstoffe; und das Verwenden des Roboterarms zum Entfernen der Verarbeitungsvorrichtung für Lebensmittel aus dem ersten Behälter enthält.

13. Verfahren nach Anspruch 12, das das Verwenden des Roboterarms zum Bewegen des ersten Behälters zu einer dritten Verarbeitungsstation, wobei die dritte Verarbeitungsstation eine Entleerungsstation umfasst, die einen Gefäß aufweist; und das Verwenden des Roboterarms zum Gießen des Inhalts des ersten Behälters in das Gefäß; das Verwenden des Roboterarms zum Bewegen des ersten Behälters zu einer zusätzlichen Abgabestation für Inhaltsstoffe, wobei die zusätzliche Abgabestation für Inhaltsstoffe eine zusätzliche Abgabevorrichtung für Inhaltsstoffe aufweist; und das Abgeben mindestens eines Nahrungsmittelinhaltsstoffs in den ersten Behälter; und/oder das Verwenden des Roboterarms zum Bewegen des ersten Behälters zu einer zusätzlichen Verarbeitungsstation für Inhaltsstoffe, wobei die zusätzliche Verarbeitungsstation für Inhaltsstoffe eine zusätzliche Verarbeitungsvorrichtung aufweist; das Verwenden des Roboterarms zum Montieren der zusätzlichen Verarbeitungsvorrichtung an dem ersten Behälter; das Betreiben der zusätzlichen Verarbeitungsvorrichtung zum Verarbeiten des oder aller in dem ersten Behälter aufbewahrten Nahrungsmittelinhaltsstoffe; und das Verwenden des Roboterarms zum Entfernen der zusätzlichen Verarbeitungsvorrichtung aus dem ersten Behälter enthält.

14. Verfahren nach Anspruch 12 oder 13, das das Bereitstellen mindestens eines weiteren Behälters; das Verwenden des Roboterarms zum Bewegen des mindestens einen weiteren Behälters zu einer der verfügbaren Abgabestationen für Inhaltsstoffe; das Abgeben mindestens eines Nahrungsmittelinhaltsstoffs in den mindestens einen weiteren Behälter; das Verwenden des Roboterarms zum Bewegen des mindestens einen weiteren Behälters zu einer der verfügbaren Verarbeitungsstationen für Inhaltsstoffe; das Verwenden des Roboterarms zum Montieren der Verarbeitungsvorrichtung an dem mindestens einen weiteren Behälter; das Betreiben der Verarbeitungsvorrichtung für Lebensmittel zum Verarbeiten des oder aller in dem mindestens einen weiteren Behälter aufbewahrten Nahrungsmittelinhaltsstoffe; und das Verwenden des Roboterarms zum Entfernen der Verarbeitungsvorrichtung für Lebensmittel aus dem mindestens einen weiteren Behälter enthält.

15. Verfahren nach einem der Ansprüche 12 bis 14, das das Bereitstellen einer Abfüllmaschine, die eine Steuerung aufweist, und einer Verpackungseinrichtung; wobei die Abfüllmaschine mit der Entleerungsstation wirkverbunden ist und dazu angeordnet ist, Nahrungsmittel von dieser zu erhalten; das Liefern von Lebensmitteln zu der Abfüllmaschine enthält; wobei die Verpackungseinrichtung der Abfüllmaschine einzelne Verpackungseinheiten liefert; wobei die Abfüllmaschine vorbestimmte Mengen an Nahrungsmitteln in die einzelnen Verpackungseinheiten abgibt; und die Verpackungseinrichtung die einzelnen Verpackungseinheiten versiegelt.

## Revendications

1. Système de transformation d'ingrédients (1)
destiné à la fabrication d'un aliment, comprenant : au moins un
réceptacle mobile (5, 5A-5G) comprenant une première patte de levage (17) ; au moins un dispositif de transformation mobile (7A-7D)
comprenant une seconde patte de levage (37) ;
et un système de transfert comprenant au moins un bras robotique (9) et
un système de commande destiné à commander le fonctionnement du bras robotique ; ledit bras robotique comprenant un outil de mise en prise, qui sert à mettre en prise et à libérer sélectivement les pattes de levage, ledit bras robotique étant agencé pour soulever et déplacer au moins un réceptacle par l'intermédiaire de la première
patte de levage ; le bras robotique est agencé pour soulever et déplacer le au moins un dispositif de transformation par l'intermédiaire de sa seconde patte de levage d'un emplacement de stockage (35E-35L) jusqu'à l'au moins un réceptacle ;
le dispositif de transformation sert à transformer les ingrédients situés à l'intérieur du au moins un réceptacle ; et le bras robotique est agencé pour retirer le dispositif de transformation du au moins un réceptacle ; ledit au moins un réceptacle comprenant une extrémité ouverte agencée pour recevoir le au moins un dispositif de transformation, et ledit au moins un dispositif de transformation étant agencé pour être monté sur le au moins un réceptacle, au niveau de l'extrémité ouverte, ledit au moins un dispositif de transformation comprenant une partie corps agencée sous forme de couvercle (39, 49) destiné à fermer sensiblement
l'extrémité ouverte du au moins un réceptacle, et un élément outil destiné à transformer des ingrédients étant situé sur un côté interne de la partie corps, et faisant saillie à partir de celle-ci, ledit élément outil étant agencé pour s'étendre dans le au moins un réceptacle lorsque la partie corps est montée sur l'extrémité ouverte du au moins un réceptacle.

2. Système selon la revendication 1, comprenant au moins un poste de transformation possédant une structure de support destinée à recevoir et à supporter le au moins un réceptacle ; ledit au moins un réceptacle pouvant être monté de manière amovible sur la structure de support ; ladite structure de support comprenant une patte de support ; ledit au moins un réceptacle comprenant une patte de montage, ladite patte de montage pouvant être fixé de manière amovible à la patte de support ; et ledit bras robotique étant agencé pour monter de manière amovible le au moins un réceptacle sur la structure de support par l'intermédiaire de la patte de montage.

3. Système selon l'une quelconque des revendications précédentes, ledit au moins un dispositif de transformation comprenant une patte de montage, ladite patte de montage pouvant être fixée de manière amovible à au moins une patte de support d'emplacement de stockage de dispositif de transformation, et ledit bras robotique étant agencé pour fixer de manière amovible le au moins un dispositif de transformation à la au moins une patte de support.

4. Système selon l'une quelconque des revendications précédentes, ledit au moins un réceptacle comprenant une base bombée ou conique.

5. Système selon l'une quelconque des revendications précédentes, ladite partie corps comprenant au moins un orifice de connecteur de fluide monté sur la partie corps.

6. Système selon l'une quelconque des revendications précédentes, ledit élément outil comprenant au moins l'un parmi : un dispositif de mélange, tel qu'un émulsionneur et/ou un homogénéisateur ; un dispositif de coupe; un dispositif de mélange et une lance d'injection de fluide.

7. Système selon l'une quelconque des revendications précédentes, comprenant une unité d'entraînement raccordée fonctionnellement à l'élément outil.

8. Système selon l'une quelconque des revendications précédentes, ledit au moins un dispositif de transformation comprenant au moins l'un parmi : un dispositif de chauffage et un dispositif de refroidissement.

9. Système selon l'une quelconque des revendications précédentes, comprenant une pluralité de réceptacles ; et/ou une pluralité de dispositifs de transformation.

10. Système selon l'une quelconque des revendications précédentes, comprenant une pluralité de postes de transformation, au moins un poste de transformation comprenant un poste de distribution d'ingrédients et comprenant au moins un dispositif de distribution d'ingrédients, et ledit bras robotique étant agencé pour déplacer le au moins un réceptacle jusqu'au dispositif de distribution pour recevoir au moins un ingrédient en provenance de celui-ci ; au moins une poste de transformation comprenant une poste de transformation d'ingrédients possédant au moins un dispositif de transformation destiné à transformer les ingrédients stockés dans au moins un réceptacle ; au moins un poste de transformation comprenant un poste de déchargement, et ledit bras robotique étant agencé pour déplacer au moins un réceptacle jusqu'au poste de déchargement et pour verser le contenu d'au moins un réceptacle dans une cuve de stockage ; et/ou au moins un poste de transformation comprenant un poste de nettoyage de réceptacle et comprenant au moins un dispositif de nettoyage destiné à laver les réceptacles, ledit dispositif de nettoyage comprenant au moins une tête de nettoyage, ledit bras robotique étant agencé pour retourner le réceptacle et le monter sur le tête de nettoyage.

11. Système selon l'une quelconque des revendications précédentes, comprenant une machine de remplissage, agencée pour recevoir des ingrédients transformés et pour distribuer des quantités prédéfinies d'ingrédients transformés ; et/ou un appareil d'emballage agencé pour fournir des articles d'emballage individuels à la machine de remplissage, et de préférence l'appareil d'emballage est agencé pour sceller les articles d'emballage individuels.

12. Procédé permettant la fabrication d'aliments, comprenant la fourniture d'un système de transformation d'ingrédients selon l'une quelconque des revendications précédentes ; l'utilisation du bras robotique pour déplacer un premier réceptacle jusqu'à un premier poste de transformation, ledit premier poste de transformation possédant un dispositif de distribution d'ingrédients ; la distribution d'au moins un ingrédient de denrée alimentaire dans le premier réceptacle ; l'utilisation du bras robotique pour déplacer le premier réceptacle jusqu'à un second poste de transformation, ledit second poste de transformation possédant un dispositif de transformation d'aliments ; l'utilisation du bras robotique pour monter le dispositif de transformation des aliments sur le premier réceptacle ; l'actionnement du dispositif de transformation d'aliments pour transformer le ou chaque ingrédient de denrée alimentaire stocké dans le premier réceptacle ; et l'utilisation du bras robotique pour retirer le dispositif de transformation d'aliments du premier réceptacle.

13. Procédé selon la revendication 12, comprenant l'utilisation du bras robotique pour déplacer le premier réceptacle jusqu'à un troisième poste de transformation, ledit troisième poste de transformation comprenant un poste de déchargement possédant une cuve ; et l'utilisation du bras robotique pour verser le contenu du premier réceptacle dans la cuve ; l'utilisation du bras robotique pour déplacer le premier réceptacle jusqu'à un poste de distribution d'ingrédients supplémentaire, ledit poste de distribution d'ingrédients supplémentaire possédant un dispositif de distribution d'ingrédients supplémentaire ; et la distribution d'au moins un ingrédient de denrée alimentaire dans le premier réceptacle ; et/ou l'utilisation du bras robotique pour déplacer le premier réceptacle jusqu'à un poste de transformation d'ingrédients supplémentaire, ledit poste de transformation d'ingrédients supplémentaire possédant un dispositif de transformation supplémentaire ; l'utilisation du bras robotique pour monter le dispositif de transformation supplémentaire sur le premier réceptacle ; l'actionnement du dispositif de transformation supplémentaire pour transformer le ou chaque ingrédient de denrée alimentaire stocké dans le premier réceptacle ; et l'utilisation du bras robotique pour retirer le dispositif de transformation supplémentaire du premier réceptacle.

14. Procédé selon la revendication 12 ou 13, comprenant la fourniture d'au moins un réceptacle supplémentaire ; l'utilisation du bras robotique pour déplacer le au moins un réceptacle supplémentaire jusqu'à l'un des postes de distribution d'ingrédients disponibles ; la distribution d'au moins un ingrédient alimentaire dans le au moins un réceptacle supplémentaire ; l'utilisation du bras robotique pour déplacer le au moins un réceptacle supplémentaire jusqu'à l'un des postes de transformation d'ingrédients disponibles ; l'utilisation du bras robotique pour monter le dispositif de transformation sur le au moins un réceptacle supplémentaire ; l'actionnement du dispositif de transformation d'aliment pour transformer le ou chaque ingrédient de denrée alimentaire stocké dans le au moins un réceptacle supplémentaire ; et l'utilisation du bras robotique pour retirer le dispositif de transformation d'aliment du au moins un réceptacle supplémentaire.

15. Procédé selon l'une quelconque des revendications 12 à 14, comprenant la fourniture d'une machine de remplissage possédant un dispositif de commande et un appareil d'emballage ; ladite machine de remplissage étant raccordée fonctionnellement au poste de déchargement et agencée pour recevoir des denrées alimentaires en provenance de celui-ci ; la livraison de produits alimentaires à la machine de remplissage ; ledit appareil d'emballage délivrant des articles d'emballage individuels à la machine de remplissage ; la machine de remplissage distribuant des quantités prédéfinies de denrées alimentaires dans les articles d'emballage individuels ; et ledit appareil d'emballage scellant les articles d'emballage individuels.
